# EUROPEAN PATENT SPECIFICATION

(11) **EP 1 002 301 B1**
(45) Date of publication and mention of the grant of the patent: **02.06.2004**
(21) Application number: 98937731.2
(22) Date of filing: 04.08.1998
(51) Int. Cl.: G07F 7/08, G07F 9/08

(54) **METHOD AND APPARATUS FOR PERFORMING TRANSACTIONS**
VERFAHREN UND VORRICHTUNG ZUM DURCHFÜHREN VON TRANSAKTIONEN
PROCEDE ET APPAREIL PERMETTANT D'EFFECTUER DES TRANSACTIONS

(30) Priority: 04.08.1997 GB 9716490
(43) Date of publication of application: 24.05.2000
(73) Proprietor: MARS, INCORPORATED, McLean Virginia 22101-3885 (US)
(72) Inventor: PHILLIPS, Carl, Alexander, West Chester, PA 19380 (US); MCLAUGHLIN, Dave, Landsdowne, PA 19050 (US)
(74) Representative: Burke, Steven David
(86) International application number: PCT/IB1998/001323
(87) International publication number: WO 1999/008236

(56) References cited:
- EP-A- 0 092 416
- EP-A- 0 109 758
- EP-A- 0 196 192
- EP-A- 0 416 958
- EP-A- 0 555 683
- EP-A- 0 619 564
- WO-A-96/08798
- DE-A- 3 802 186
- GB-A- 2 083 259
- GB-A- 2 296 361

## Description

This invention relates to a method and apparatus for performing a transaction. It is particularly, but not exclusively, applicable to machines for vending products or services, such as beverage dispensers, food dispensers, payphones, gaming machines, etc. It is, however, also applicable to other machines such as currency dispensers, and machines simply for accepting payment, such as at a terminal in a shop.

It has been proposed that such machines should accept payment by means of "smart cards", i.e. payment tokens, generally credit-card shaped and sized, containing a memory and usually a microprocessor, which are machine-readable. It has also been proposed that certain types of such cards should store a credit value, which can be replenished in exchange for the owner making a payment, and which is diminished in accordance with the value of a product or service received by the owner. The present invention relates to such cards. The term "card" will be used herein, but it is to be noted that this is intended to cover memory-containing tokens which need not be credit-card shaped and sized.

For convenience, all such machines are referred to in the following as "vending machines".

The owner of a vending machine or the like which receives payment in the form of credit received from cards needs a way of retrieving that payment from the vending machine. One proposal is that the vending machine should store an accumulated value representing the total credit deducted from the cards in payment for products or services. An operator or serviceman would be provided with means for reading out this accumulated value and storing it in a removable device, preferably a special smart card, the stored accumulated value being reset at the same time. The device can then be presented to a bank in exchange for the value stored therein (see for example GB-A-2 296 361).

This is a particularly convenient technique, because it uses the same technology as already exists for reading credit data from, and writing credit data to, a smart card. It is necessary in these circumstances, though, to store information which is used to identify those special cards which are used by operators or servicemen in order to retrieve the accumulated credit data, so that this data is only given to authorised people.

One problem exists in that there is a possibility that a special card may be lost or stolen. Its unauthorised use would result in the loss of all the value stored in one or more vending machines, and, possibly, the use of the device which has collected the accumulated credit in other vending machines for obtaining products or services.

To deal with this problem, it is necessary to reconfigure each vending machine whenever one of the special cards is lost or stolen, so that all the relevant vending machines will no longer recognise these as authorised cards and will not transfer the accumulated credit data to those cards. However, reconfiguration is a relatively skilled job, using specialist equipment, and therefore it can take some considerable time until all the machines are reconfigured.

According to the invention, a machine for accepting payment by diminishing the value of credit data stored on a card is operable to maintain a record of the accumulated credit value from a plurality of transactions, the machine storing identification data and being operable to use such data to recognise a card as a credit-downloading device, and thereafter to transfer the accumulated value to the credit-downloading device, the information data further including data to enable the machine to recognise a card as a downloading-preventing device, the machine being operable to prevent the downloading of accumulated credit data in response to recognising such a device.

Using these techniques, once a special downloading-card is lost or stolen, the owner of the vending machines can immediately issue a serviceman with a downloading-preventing card, i.e. a card with a predetermined identification number, and the serviceman can then visit the vending machines and prevent unauthorised downloading of data simply by inserting this card. This special downloading-preventing device will be referred to herein for convenience as a "stop card". Preferably, it is read using the same card reader as is used for ordinary transactions, which is also preferably used for transferring accumulated data to the special downloading cards.

The inhibiting of downloading can take place by setting a flag within the machine, which is checked prior to each downloading operation. Alternatively, or additionally, this could be done by clearing the identifying-information used to identify the downloading cards, and/or by altering flags associated with the identification information.

It is envisaged that the use of the stop card for inhibiting downloading can be carried out quickly, easily and inexpensively. The machines can thereafter be reconfigured at a convenient timing, without worrying about unauthorised downloading of credit data.

A further problem for owners of vending machines of the type generally described above is the fact that, in order to perform testing, a serviceman generally has to be provided with a card storing a significant amount of value so that he can repeatedly initiate vending operations for testing purposes. These cards are therefore intrinsically valuable, and are open to misuse and represent a significant loss if stolen.

According to a preferred embodiment of the invention, the transaction machine is further operable to accept payment in the form of credit value transferred from a card, the machine stores information to enable it to recognise a special test card, and is operable in response to recognising such a card to vend a product or perform a service without requiring payment from the test card. The machine can either deduct the payment value from the test card prior to vending the product or performing the service, and then refund the value, or can vend a product or perform a service without deducting credit data from the card. The former is preferred, because it tests more of the conventional operations of the machine.

The test card need not have any stored credit data and thus would have no intrinsic value, or if it does store credit data this can be limited to the value required for a single transaction. Furthermore, the "free vending" operation would be allowed only in those machines which store the appropriate identification data. Accordingly, the consequences of misuse or loss of the test card are substantially reduced.

If desired, the "free vending" operation can take place only after the serviceman has switched the machine into a test mode, for example using a key. Additionally, or alternatively, the machine can be arranged to store an indication of how many free vends have been provided.

An arrangement embodying the invention will now be described by way of example with reference to the accompanying drawings, in which:
Figure 1 shows schematically a vending machine in accordance with the invention;
Figure 2 illustrates the contents of a memory storing registration information; and
Figure 3 is a flowchart of the operation of the machine.

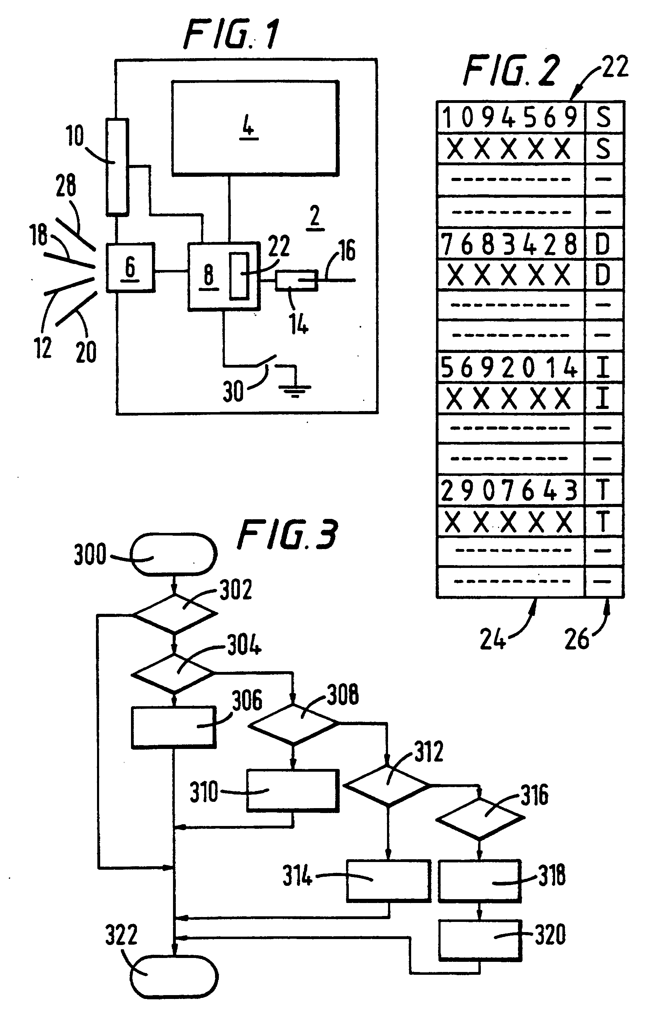

Referring to Figure 1, a vending machine 2 has a product vending section 4, a card reader 6, a control unit 8 and an input/output unit 10 comprising a display and a keyboard. A customer inserts a smart card such as that shown at 12 into the card reader 6. The card reader 6 then reads the credit value from the card 12 and the control unit 8 causes this to be displayed on the display of the unit 10. The customer can then operate the keypad of the unit 10 in order to select a product for vending. Before the product is vended, the value stored on the card 12 is cancelled and an amount corresponding to the initial value minus the value of the vend is written onto the card 12.

The machine 2 stores an accumulated credit value corresponding to the total amount deducted from the cards inserted into the machine. In the present embodiment this is achieved using an interface unit 14 in the form of a second card reader, and an internal smart card 16. Each time a value is deducted from an inserted card 12, that value is added to the credit stored on the internal card 16.

When an operator wishes to retrieve the payment made by the customers using the machine, a special downloading card 18 is inserted into the card reader 6. This special card is recognised by the control unit 8, which then causes the amount stored on the internal card 16 to be added to the amount currently stored on the downloading card 18, and the amount stored on the card 16 to be reduced to zero. The downloading card 18 can then be taken away and ultimately handed into a bank in exchange for the amount stored thereon.

In the event that a downloading card 18 is lost or stolen, a serviceman is given a special stop card 20 which he takes to each of a number of vending machines in turn, and inserts it into the card reader 6 of each machine. This is recognised by the unit 8, and is used to disable the downloading function of the machine. The control unit 8 has a memory 22, the contents of which are illustrated schematically in Figure 2. The memory stores a plurality of identification numbers indicated at 24 and, associated with each identification number, a flag 26. Whenever a card is inserted either into the card reader 6 or the interface unit 14, this memory is checked to determine whether an identification number stored by the card matches any of those in the memory 22. If so, then the machine takes appropriate action depending upon the flag 26 associated with that card.

In particular, the unit 8 will only accept as valid a card 16 which has associated therewith a flag indicating that it is valid for internal use (such flags being indicated as "I" in Figure 2).

If a serviceman wishes to test the apparatus, he can do this using a special test card 28 which is inserted into the card reader 6. Preferably, prior to the testing operation, the serviceman unlocks a cabinet of the vending machine and operates a switch 30 (which may be operated automatically by the unlocking and/or opening of the cabinet). Upon insertion of the card 28, the unit 8 reduces the value on the card 28 and adds it to that on the card 16, as usual, and permits a vend. However, following the vend, the value is then taken off the internal card 16 and added to that stored on the test card 28, so that the original value is restored. The value is thus held in escrow during the transaction by the internal card 16.

Referring to Figure 3, the control unit 8 operates as follows upon insertion of a card in the card reader 6.

After the start operation 300, the unit tests that the card is valid at step 302, and at the same time reads its identification number. Assuming that the card is valid, the program proceeds to step 304 to check whether the identification number is stored in the memory 22. If not, a conventional vend operation, including reading of the credit data, re-writing of reduced credit data and vending of a product, takes place at step 306.

If the identification number is recognised, the program proceeds to step 308 to test whether the flag 26 associated with the identification number is "D" representing a downloading card 18. If so, a downloading operation takes place at step 310, resulting in the credit on the card 16 being reduced to zero, and that on the card 18 being increased correspondingly.

If the identification flag 26 is not "D", the program proceeds to step 312 to check whether it is "S", corresponding to a stop card 20. If so, the program proceeds to step 314, where the control unit 8 alters all the flags "D" to some other value, e.g. "X". Alternatively, the unit 8 clears the contents of all memory locations 24 corresponding with flags "D". Either operation would ensure that future insertion of any downloading cards will be ineffective. As a further alternative, an internal flag within the program routine could be altered so that steps 308 and 310 (or just 310) are omitted in future executions of the program.

If, at step 312, the flag is not recognised to be "S", the program proceeds to step 316. Here, the unit 8 checks whether the flag corresponds to "T", indicating a test card 28. If so, the program proceeds to a vend operation 318, corresponding to the vend operation 306 described above. Following that vend operation, at step 320, the amount deducted from the card during step 318 is refunded, as described above.

If desired, the program could check that the switch 30 has been operated (indicating that the machine has been switched to a test mode) and perform steps 318 and 320 (or step 320) only if this condition is detected.

The program routine terminates at step 322 if the card is found invalid (at step 302), after a vending operation (at step 306), after the appropriate operation following detection of a flag "D", "S" or "T", or if no valid flag is detected.

If a stop card 20 has been used, then an appropriately authorised serviceman can, at a later date, restore the downloading option by, e.g., connecting to the machine a computer or hand-held terminal. This will restore any flags altered by the routine 314, but erase identification information relating to the stolen or lost downloading card. To facilitate this operation, and avoid the need for the computer or terminal to store all the identifying information for other authorised downloading cards, it is preferred that step 314 should not erase this identifying information.

If desired, the test card 28 can store an expiry date, and the machine can be arranged to allow a "free vend" only after checking that this expiry date has not been passed. Additionally or alternatively, the card may store a number which represents the number of permitted "free vends" and which is checked by the machine, and altered each time a "free vend" occurs:

## Claims

1. A machine for use in transactions, the machine being operable to accept payment by diminishing the value of credit data stored on a card, the machine being operable to maintain a record of the accumulated value of the payments made, and having a memory storing identification data, the machine being operable to use the stored data to recognise a card as a card authorised for the purposes of downloading, and in response thereto to transfer the accumulated value to the card;
**characterised in that** the machine is further operable to use the identification information to recognise that a card is authorised for the purpose of inhibiting downloading, and in response thereto to prevent transfer of accumulated values to cards authorised for downloading.

2. A machine as claimed in claim 1, wherein the machine is operable to check data identifying a card against stored identifying data representing a plurality of cards and, if a match is found, to permit downloading if a flag associated with the matching identifying data indicates that the card is authorised for downloading, and wherein the machine is operable, in response to recognising a card as being authorised for inhibiting downloading, to alter the flags associated with the data identifying cards authorised for downloading.

3. A machine as claimed in claim 1, wherein the machine is operable, in response to recognising a card as being authorised for inhibiting downloading, to reset the memory locations containing data identifying cards authorised for downloading.

4. A machine as claimed in any preceding claim, wherein the machine is operable, in response to identifying a card as being authorised for inhibiting downloading, to set a flag so that future transfer of accumulated values to a card authorised for downloading is inhibited irrespective of whether or not the memory stores data identifying that card as authorised for downloading.

5. A machine as claimed in any preceding claim, wherein the machine is further operable to use the identification data to recognise a card as authorised for use as a test card, and in response thereto to allow an operation normally performed by the machine in exchange for payment to be carried out without requiring a resultant loss in the credit stored on the test card.

6. A machine as claimed in claim 5, wherein the machine is operable in response to recognising that a card is authorised for test purposes to reduce the credit value stored on the card as payment, and then to restore the credit value.

7. A machine as claimed in claim 5 or 6 wherein the machine is arranged to enable said operation without requiring a resultant loss in the credit on the card only if the machine is first switched into a test mode.

8. A method of operating a vending machine which is operable to accept payment by diminishing the value of credit data stored on a card, and which is further operable to recognise a card as being authorised for the purposes of downloading and in response thereto to transfer to the card a record of the accumulated value of payments made, the method comprising causing the machine to read a card storing data identifying the card as being authorised for the purpose of inhibiting downloading, the machine thereafter being inoperable for performing the downloading operation.

## Patentansprüche

1. Vorrichtung zur Verwendung bei Transaktionen, wobei die Vorrichtung so betätigbar ist, daß sie Zahlung durch Verringerung des Wertes von auf einer Karte gespeicherten Kreditdaten annimmt und eine Aufzeichnung des akkumulierten Wertes der erfolgten Zahlungen aufbewahrt, ferner einen Speicher zur Speicherung von Kenndaten aufweist und so betätigbar ist, daß sie die gespeicherten Daten zur Erkennung einer Karte als einer solchen verwendet, die zum Downloaden autorisiert ist und dementsprechend den akkumulierten Wert auf die Karte überträgt,
**dadurch gekennzeichnet, daß** die Vorrichtung ferner so betätigbar ist, daß sie die Kenninformation dazu verwendet zu erkennen, daß eine Karte zum Verhindern des Downloadens autorisiert ist und dementsprechend die Übertragung akkumulierter Werte auf zum Downloaden autorisierte Karten verhindert.

2. Vorrichtung nach Anspruch 1, die so betätigbar ist, daß sie Kartenkenndaten anhand gespeicherter Kenndaten, die mehrere Karten angeben, prüft und bei Übereinstimmung das Downloaden gestattet, sofern ein den übereinstimmenden Kenndaten zugeordnetes Flag angibt, daß die Karte zum Downloaden autorisiert ist, und wobei die Vorrichtung so betätigbar ist, daß sie bei Erkennung einer Karte als einer solchen, die zum Verhindern des Downloaden autorisiert ist, die Flags ändert, die den Daten zugeordnet sind, die zum Downloaden autorisierte Karten angeben.

3. Vorrichtung nach Anspruch 1, die so betätigbar ist, daß sie bei Erkennung einer Karte als einer zum Verhindern des Downloadens autorisierten Karte diejenigen Speicherplätze zurücksetzt, die Daten enthalten, die zum Downloaden autorisierte Karten angeben.

4. Vorrichtung nach einem der vorhergehenden Ansprüche, die so betätigbar ist, daß sie beim Erkennen einer Karte als einer zum Verhindern des Downloadens autorisierten Karte ein Flag setzt, so daß die künftige Übertragung akkumulierter Werte auf eine zum Downloaden autorisierte Karte unabhängig davon verhindert wird, ob in dem Speicher Daten, die diese Karte als zum Downloaden autorisierte Karte bezeichnen, gespeichert sind oder nicht.

5. Vorrichtung nach einem der vorhergehenden Ansprüche, die ferner so betätigbar ist, daß sie die Kenndaten zur Erkennung einer Karte als zur Verwendung als Testkarte autorisierter Karte und dementsprechend die Ausführung einer normalerweise gegen Zahlung von der Vorrichtung durchgeführten Operation gestattet, ohne eine entsprechende Verringerung in dem auf der Testkarte gespeicherten Kredit zu erfordern.

6. Vorrichtung nach Anspruch 5, die so betätigbar ist, daß sie bei Erkennen einer Karte als einer für Testzwecke autorisierten Karte den auf der Karte gespeicherten Kreditwert als Zahlung reduziert und den Kreditwert anschließend wiederherstellt.

7. Vorrichtung nach Anspruch 5 oder 6, die so ausgelegt ist, daß sie die Operation ohne das Erfordernis einer entsprechenden Verringerung in dem Kredit auf der Karte nur dann gestattet, wenn sie zuvor in einen Testmodus geschaltet wird.

8. Verfahren zum Betrieb eines Verkaufsautomaten, der so betätigbar ist, daß er Zahlung durch Verringerung des Wertes von auf einer Karte gespeicherten Kreditdaten annimmt, eine Karte als zum Downloaden autorisierte Karte erkennt und dementsprechend eine Aufzeichnung des akkumulierten Wertes von erfolgten Zahlungen auf die Karte überträgt, wobei in dem Verfahren die Vorrichtung veranlaßt wird, eine Karte zu lesen, auf der Daten gespeichert sind, die die Karte als zum Verhindern des Downloadens autorisierte Karte bezeichnen, und die Vorrichtung danach zur Durchführung von Download-Vorgängen gesperrt ist.

## Revendications

1. Machine destinée à être utilisée dans les transactions, la machine pouvant accepter un paiement en diminuant la valeur de données de crédit stockées sur une carte, la machine pouvant garder une trace de la valeur cumulée des paiements effectués, et ayant une mémoire stockant des données d'identification, la machine pouvant utiliser les données stockées pour reconnaître une carte comme carte autorisée à des fins de téléchargement, et en réponse à cela transférer la valeur cumulée sur la carte ;
**caractérisée en ce que** la machine peut en outre utiliser les informations d'identification pour reconnaître qu'une carte est autorisée aux fins d'interdire le téléchargement, et en réponse à cela empêcher le transfert de valeurs cumulées sur des cartes autorisées pour le téléchargement.

2. Machine selon la revendication 1, dans laquelle la machine peut comparer des données identifiant une carte à des données d'identification stockées représentant une pluralité de cartes et, si une correspondance est trouvée, permettre le téléchargement si un indicateur associé aux données d'identification correspondantes indique que la carte est autorisée pour le téléchargement, et dans laquelle la machine peut, en réponse à la reconnaissance d'une carte comme étant autorisée pour interdire le téléchargement, modifier les indicateurs associés aux données identifiant des cartes autorisées pour le téléchargement.

3. Machine selon la revendication 1, dans laquelle la machine peut, en réponse à la reconnaissance d'une carte comme étant autorisée pour interdire le téléchargement, réinitialiser les emplacements de mémoire contenant des données identifiant des cartes autorisées pour le téléchargement.

4. Machine selon l'une quelconque des revendications précédentes, dans laquelle la machine peut, en réponse à l'identification d'une carte comme étant autorisée pour interdire le téléchargement, établir un indicateur de façon à ce que le futur transfert de valeurs cumulées sur une carte autorisée pour le téléchargement soit interdit, que la mémoire stocke des données identifiant cette carte comme autorisée pour le téléchargement ou non.

5. Machine selon l'une quelconque des revendications précédentes, dans laquelle la machine peut en outre utiliser les données d'identification pour reconnaître une carte comme autorisée pour une utilisation comme carte d'essai, et en réponse à cela permettre à une opération normalement effectuée par la machine en échange d'un paiement d'être effectuée sans nécessiter de perte résultante dans le crédit stocké sur la carte d'essai.

6. Machine selon la revendication 5, dans laquelle la machine peut, en réponse à la reconnaissance qu'une carte est autorisée à des fins d'essai, réduire la valeur de crédit stockée sur la carte comme paiement, puis restaurer la valeur de crédit.

7. Machine selon la revendication 5 ou 6, dans laquelle la machine est agencée pour permettre ladite opération sans nécessiter de perte résultante dans le crédit sur la carte seulement si la machine est d'abord commutée dans un mode d'essai.

8. Procédé de fonctionnement d'un distributeur automatique qui peut accepter un paiement en diminuant la valeur de données de crédit stockées sur une carte, et qui peut en outre reconnaître une carte comme étant autorisée à des fins de téléchargement et en réponse à cela transférer sur la carte une trace de la valeur cumulée des paiements effectués, le procédé comprenant le fait de faire en sorte que la machine lise une carte stockant des données identifiant la carte comme étant autorisée aux fins d'interdire le téléchargement, la machine après cela ne pouvant pas effectuer l'opération de téléchargement.
